# EUROPÄISCHE PATENTANMELDUNG

(11) **EP 4 378 562 A1**
(43) Veröffentlichungstag der Anmeldung: **05.06.2024**
(21) Anmeldenummer: 23207266.0
(22) Anmeldetag: 01.11.2023
(51) Int. Cl.: B01D 53/00, B01D 53/72, F23G 7/06, H05B 3/06, H05B 6/10, F01N 3/022, F01N 3/023, F01N 3/10, B01D 46/84

(54) **VERFAHREN ZUR NACHBEHANDLUNG EINES ABGASES EINER PYROLYSEREAKTION**

(30) Priorität: 30.11.2022 DE 102022212861
(71) Anmelder: hollomet GmbH, 01279 Dresden (DE)
(72) Erfinder: Kunz, Willy, 01097 Dresden (DE); Waag, Ulf, 79713 Bad Säckingen (DE); Despang, Florian, 01099 Dresden (DE); Holz, Albert, 01307 Dresden (DE)
(74) Vertreter: Pfenning, Meinig & Partner mbB

(57) **Zusammenfassung**

Bei dem Verfahren werden Kohlenwasserstoffverbindungen thermisch zersetzt, indem bei einem ersten Intervall freigesetzter Abgasstrom durch eine offenzellige Struktur geführt und dabei an der mindestens einen offenzelligen Struktur eine Temperatur von mindestens 600 °C eingehalten wird, so dass enthaltenen Kohlenwasserstoffverbindungen thermisch zersetzt werden und dabei erhaltener Kohlenstoff an der offenzelligen Struktur abgelagert wird.

Nach Ablauf einer Betriebszeit und/oder dem Erreichen eines vorgebbaren Schwellwertes einer Druckdifferenz eines Druckes P1 und eines Druckes P2 in Strömungsrichtung nach dem Austritt aus der mindestens einen offenzelligen Struktur bestimmt oder ein vorgebbarer Schwellwert des Druckes P1 bestimmt wird, die Zufuhr des Abgasstromes zur mindestens einen offenzelligen Struktur gestoppt und dann in einem zweiten Intervall Sauerstoff oder ein Sauerstoff enthaltendes Gasgemisch durch die eine offenzellige Struktur geführt und bei einer Temperatur von mindestens 600 °C der an Oberflächen der einen offenzelligen Struktur abgesetzte Kohlenstoff oxidiert und das/die gebildete(n) Oxid(e) sowie Abgasreste abgeführt wird/werden.

## Beschreibung

Die Erfindung betrifft ein Verfahren zur Nachbehandlung eines Abgases einer Pyrolysereaktion.

Pyrolysereaktionen werden üblicherweise zur thermischen Zersetzung organischer chemischer Verbindungen eingesetzt, die Bestandteil von Werkstoffen oder Materialien sind, die fertigungsbedingt bei der Herstellung oder Modifizierung von Produkten eingesetzt worden sind. Häufig sind dies organische Binder. Diese sollen bei verschiedensten Verfahren, wie beispielsweise bei Sinterverfahren und Verfahren zur additiven Fertigung von Bauteilen in Halbzeugen oder Grünkörpern bzw. auch Materialien, die zur additiven Fertigung eingesetzt worden sind, enthalten sein, um eine Formgebung zu ermöglichen. Nach der Formgebung bzw. einer lokal definierten Verfestigung können diese organischen Komponenten entfernt werden, da sie nicht mehr benötigt werden und ein fertig hergestelltes Bauteil bzw. ein Bauteilbereich beispielsweise dann allein mit anorganischen Komponenten gebildet ist.

Dabei erfolgt die thermische Zersetzung unter Vakuumbedingungen oder auch in inerten Atmosphären, so dass keine vollständige thermische Zersetzung erreicht werden kann und im Abgas dann nicht oder nur teilweise zersetzte organische Komponenten in Form von Kohlenwasserstoffverbindungen enthalten sind. Diese organischen Bestandteile des Abgases, die üblicherweise nach außen und dann an die Umgebung abgegeben werden, setzen sich an Oberflächen einer jeweiligen Abgasabführung, an Ventilen und sogar an Elementen eines Verdichters, der saugseitig an eine Abgasabführung angeschlossen ist, in der Regel nach einer Kondensierung ab und lagern sich so an. Dadurch können sehr aufwändig durchzuführende Reinigungsarbeiten werden, um die Abgasabführung innen und insbesondere Elemente von Verdichtern, mit denen der jeweilige Abgasstrom nach außen abgeführt wird, zu reinigen und so vor nachhaltigen Schäden zu schützen. Es kann sogar erforderlich werden durch die Anhaftung von Kohlenwasserstoffverbindungen an Elementen von Verdichtern hervorgerufene Beschädigungen zu beseitigen, was wegen der hohen Haftwirkung der Kohlenwasserstoffen an Oberflächen, an denen sie sich haftend angelagert haben, mit hohem Aufwand verbunden ist. Außerdem sind die für eine solche Reinigung bzw. Reparaturen entsprechend großen Ausfallzeiten nachteilig.

Es ist daher Aufgabe der Erfindung, Möglichkeiten zur Vermeidung bzw. Reduzierung der Menge von sich an Oberflächen nach einer Durchführung einer Pyrolyse im Abgastrakt enthaltenen und sich an Oberflächen dort absetzenden Kohlenwasserstoffverbindungen anzugeben.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Bei dem Verfahren zur Nachbehandlung eines Abgases einer Pyrolysereaktion werden im jeweiligen Abgasstrom enthaltene Kohlenwasserstoffverbindungen thermisch zersetzt, indem der innerhalb eines ersten Intervalls bei einer Pyrolyse freigesetzte Abgasstrom durch mindestens eine offenzellige Struktur mittels einer Druckdifferenz zwischen einer Einrichtung in der die jeweilige Pyrolyse durchgeführt wird und einer mit der Umgebung verbundenen Abgasabführung geführt wird. Dabei wird an der mindestens einen offenzelligen Struktur eine Temperatur von mindestens 600 °C, bevorzugt mindestens 800 °C, besonders bevorzugt von mindestens 1000 °C eingehalten, so dass zumindest ein Teil der im Abgasstrom enthaltenen Kohlenwasserstoffverbindungen thermisch zersetzt wird und dabei erhaltener Kohlenstoff an Oberflächen der mindestens einen offenzelligen Struktur abgelagert wird.

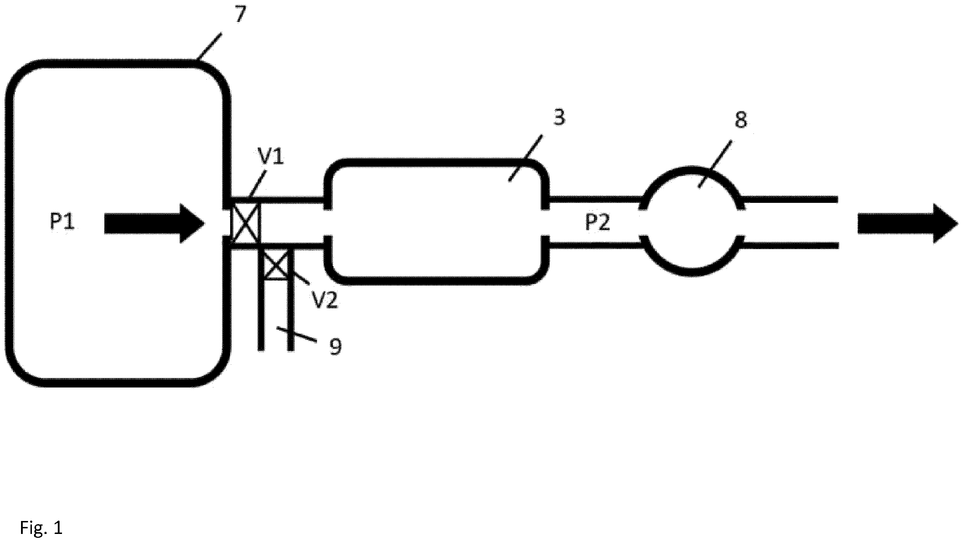

Nach Ablauf einer vorgebbaren Betriebszeit und/oder dem Erreichen einer vorgebbaren Druckdifferenz eines Druckes P1, der vor dem Eintritt des Abgasstromes in die mindestens eine offenzellige Struktur und eines Drucks P2 in Strömungsrichtung nach dem Austritt aus der mindestens einen offenzelligen Struktur bestimmt wird, wird die Zufuhr des Abgasstromes zur mindestens einen offenzelligen Struktur gestoppt. Man kann dies auch erreichen, indem lediglich der Druck P1 berücksichtigt wird, wie dies auch bei der Beschreibung von Figur 1 erläutert werden wird.

Dann wird in einem zweiten Intervall anstelle des Abgasstromes Sauerstoff oder ein Sauerstoff enthaltendes Gasgemisch durch die mindestens eine offenzellige Struktur geführt und bei einer Temperatur von mindestens 600 °C, bevorzugt mindestens 800 °C und besonders bevorzugt mindestens 1000 °C der an Oberflächen der mindestens einen offenzelligen Struktur abgesetzte Kohlenstoff oxidiert. Das/die gebildete(n) Oxid(e) (CO und/oder CO₂) sowie Abgasreste, die dann noch geringfügige Reste an Kohlenwasserstoffverbindungen enthalten können, werden dann abgeführt.

Die erwähnte Druckdifferenz zwischen P1 und P2 kann mit mindestens einem Verdichter erreicht werden, mit dem der Abgasstrom durch die mindestens eine offenzellige Struktur gesaugt wird.

Als eine offenzellige Struktur kann ein offenporöser Körper (Schaumkörper) oder ein mit Filamenten gebildetes textiles Gebilde, das aus oder mit einem elektrisch leitenden Werkstoff gebildet ist, eingesetzt werden. Ein textiles Gebilde kann beispielsweise ein Geflecht, ein Gewirk, ein Gelege oder ein Gewebe von Filamenten sein.

Die offenzellige Struktur kann an eine elektrische Spannungsquelle zur Durchführung einer elektrischen Widerstandsbeheizung angeschlossen sein, und die Einhaltung der jeweiligen Mindesttemperatur mittels elektrischer Widerstandsbeheizung oder mittels einer elektrischen Wechselspannungsquelle und mindestens einer elektrischen Spule induktiv auf die jeweilige Mindesttemperatur erwärmt werden. Dabei kann eine oder es können mehrere elektrische Spule(n) die jeweilige offenzellige Struktur von außen umschließen.

Um dies zu erreichen, kann die mindestens eine offenzellige Struktur, die aus einem Metall oder aus einem elektrisch leitfähigen Keramikwerkstoff besteht oder eine mit einem Metall an Oberflächen einer offenzelligen Struktur, die aus einem keramischem Werkstoff besteht, eingesetzt werden. Das jeweilige Metall oder eine entsprechende Legierung sollte eine Schmelztemperatur aufweisen, die oberhalb der Temperatur liegt, die bei der Erwärmung der jeweiligen offenzelligen Struktur in den Intervallen erreicht werden soll. Besonders geeignete Metalle sind FeCrAl-, NiCrAl-, Nickelbasis- oder Cobaltbasislegierungen.

Als elektrisch leitende Keramik kann man beispielsweise SiC einsetzen, das einen Kohlenstoffanteil aufweist, mit dem der SiC- Werkstoff oberhalb der Perkolationsschwelle liegt. Zur Beeinflussung der elektrischen Leitfähigkeit und auch anderer Parameter kann ein Siliciumnitrid-Werkstoff auch mit Molybdänsilizid modifiziert sein. Dabei kann ein Gemisch aber auch ein Verbundwerkstoff eingesetzt werden.

Eine offenzellige Struktur kann auch mit einem keramischen Werkstoff gebildet sein, der an Oberflächen mit elektrisch leitendem Material, insbesondere einem Metall oder einer Metalllegierung beschichtet ist. Dabei sollte die Beschichtung an der Oberfläche so ausgebildet sein, dass eine ausreichende und möglichst homogene Erwärmung durch elektrischen Strom erreicht werden kann.

Die Beschichtung kann mittels eines PVD- oder CVD-Verfahrens aber auch durch Beschichtung mit einer Metallpartikel enthaltenden Suspension erfolgen, wobei die organischen Komponenten der Suspension nach der Beschichtung bei einer thermischen Behandlung zersetzt (pyrolisiert) und die Metallpartikel dann miteinander versintert werden.

Erste und zweite Intervalle können alternierend nacheinander mehrfach wiederholt durchgeführt werden. Es besteht aber auch die Möglichkeit, den Abgasstrom alternierend durch mehrere parallel geschaltete offenzellige Strukturen zu führen, so dass in mindestens einer offenzelligen Struktur ein erstes Intervall und gleichzeitig in mindestens einer zweiten parallel geschalteten offenzelligen Struktur ein zweites Intervall durchgeführt wird. Nach Ablauf einer vorgebbaren Betriebsdauer kann dann ein Wechsel der Betriebsart in den offenzelligen Strukturen eingeleitet werden, so dass mit der einen offenzelligen Struktur nach Durchführung eines ersten Intervalls dann ein zweites Intervall und mit der jeweils anderen offenzelligen Struktur nach Durchführung eines zweiten Intervalls ein erstes Intervall durchgeführt werden.

Alternativ kann auch während der Durchführung eines zweiten Intervalls freigesetztes Abgas, in dem nach der Pyrolyse Kohlenwasserstoffverbindungen mit erhöhter Konzentration enthalten sind, einem Pufferbehälter zugeführt und darin gespeichert werden, bevor es nach Beendigung der Durchführung des jeweiligen zweiten Intervalls zur Durchführung eins ersten Intervalls der mindestens einen offenzelligen Struktur zugeführt wird.

So lässt sich eine zumindest nahezu kontinuierliche Verfahrensdurchführung erreichen.

Die für die Durchführung erster Intervalle gewählte vorgegebene Betriebszeit kann nach der Durchführung mindestens eines ersten und zweiten Intervalls angepasst und dabei bevorzugt verkürzt werden. Dies hat zur Folge, dass man so berücksichtigen kann, dass sich bei der Durchführung zweiter Intervalle Reste an Kohlenstoff an einer jeweiligen offenzelligen Struktur ablagern, die nicht vollständig oxidiert worden sind und dadurch die Effektivität bei der Durchführung erster und ggf. auch zweiter Intervalle verringert ist. Führt man eine Bestimmung der Druckdifferenz zwischen den Drücken P1 und P2 durch, kann eine entsprechende Anpassung der Länge der Zeitintervalle in denen erste und ggf. auch zweite Intervalle durchgeführt werden, in Abhängigkeit der bestimmten Druckdifferenz allein anhand dieser Druckdifferenzbestimmung erfolgen. Analog kann auch eine alleinige Berücksichtigung der Drücke P1 in Strömungsrichtung vor einer offenzelligen Struktur entsprechend berücksichtigt werden.

Die offene Porosität von bei der Erfindung eingesetzten offenzelligen Strukturen sollte bei einer elektrischen Widerstandsbeheizung mindestens 50 % betragen. Bei induktiver Erwärmung sollte die offene Porosität größer 10 % sein.

Der Abgasstrom kann durch mindestens eine offenzellige Struktur geführt werden, die in Strömungsrichtung des Abgasstromes eine sich verringernde Porosität oder Porengröße oder eine Verkleinerung der Hohlräume zwischen Filamenten eines textilen Gebildes aufweist.

Alternativ können in Strömungsrichtung des Abgasstromes mehrere offenzellige Strukturen angeordnet und vom Abgasstrom durchströmt sein, deren Porosität und/oder Porengröße oder deren Hohlräume zwischen Filamenten in Strömungsrichtung des Abgasstromes sukzessive verkleinert sind.

Dadurch kann erreicht werden, dass in Strömungsrichtung des Abgasstromes vorderen Bereichen eine kleinere spezifische Oberfläche an Werkstoff der jeweiligen offenzelligen Struktur und gleichzeitig größere Hohlräume dort vorhanden sind, als in Strömungsrichtung des Abgasstromes nachfolgend angeordneten Bereichen. Dort ist mehr Raum vorhanden in dem sich an der Oberfläche abgesetzter Kohlenstoffanlagern kann, da sich dort erfahrungsgemäß bei der thermischen Zersetzung eine größere Kohlenstoffmenge anlagert, die ansonsten zu einer frühzeitigen Verstopfung der offenzelligen Struktur führen könnte, so dass dann erheblich verkürzte Zeiten in denen erste und ggf. auch zweite Intervalle durchgeführt werden, in Kauf genommen werden müssten.

Vorteilhaft kann bei der Durchführung zweiter Intervalle gebildete(s) Kohlenstoffoxid(e) einer weiteren Nutzung, bevorzugt getrennt nach einer Separation als Kohlenmonoxid und Kohlenstoffdioxid zugeführt werden. Eine Trennung von Kohlenmonoxid und Kohlendioxid kann bei geeigneter Verfahrensführung während der zweiten Intervalle erreicht werden, wenn die Bedingungen des Boudouard-Gleichgewichts berücksichtigt werden können.

Die Durchführung eines erfindungsgemäßen Verfahrens kann mit einer elektronischen Regel- und Steuereinrichtung beeinflusst werden. Dabei können insbesondere die jeweilige Zusammensetzung des thermisch nachzubehandelnden Abgases, also welche Kohlenwasserstoffverbindungen in welcher Menge enthalten sind, dessen Volumenstrom, die Ausbildung offenzelliger Strukturen (Werkstoff, Dimensionierung, Porosität, Anzahl der jeweils bereist durchgeführten Betriebszyklen in denen erste und zweite Intervalle bereits durchgeführt worden sind, die Drücke P1 und P2, die Temperatur bzw. die Temperaturverteilung des Abgasstromes oder an der mindestens einen offenzeligen Struktur und/oder, der elektrische Widerstand an der jeweiligen offenzelligen Struktur berücksichtigt werden.

Je nachdem kann die Leistung, die zur Erwärmung der mindestens einen offenzelligen Struktur genutzt wird und die jeweilige zeitliche Länge mit denen erste und zweite Intervalle durchgeführt werden, beispielsweise durch Steuerung oder Regelung der jeweiligen elektrischen Spannungsquelle und der Ventile V1 und V2 beeinflusst werden.

Nachfolgend soll die Erfindung beispielhaft näher erläutert werden.

Dabei zeigen:
Figur 1 in schematischer Form den Ablauf einer Nachbehandlung eines Abgasstromes einer Pyrolysereaktion und
Figur 2 eine Schnittdarstellung durch ein Beispiel einer Einrichtung, bei der ein Abgasstrom einer Pyrolysereaktion durch eine erwärmbare offenzellige Struktur geführt ist, um im Abgasstrom enthaltene Kohlenwasserstoffverbindungen thermisch zu zersetzen und in harmlosere chemische Verbindungen umzuwandeln.

Wie man Figur 1 entnehmen kann, kann in einem Ofen 7 eine Pyrolysereaktion durchgeführt werden. Das dabei freigesetzte Abgas gelangt durch eine Leitung und durch eine offenzellige Struktur 3 mittels eines saugseitig angeschlossenen Verdichters 8 in die Umgebung, nach dem eine thermische Nachbehandlung mit der offenzelligen Struktur 3 durchgeführt worden ist.

Dabei ist in der Leitung zwischen dem Ofen 7 und der offenzelligen Struktur 3 ein Ventil V1 angeordnet, das während der Durchführung eines ersten Intervalls geöffnet und bei der Durchführung eines zweiten Intervalls geschlossen ist.

Im Bereich der Leitung in der das Ventil V1 angeordnet ist, ist zwischen dem Ventil V1 und der offenzelligen Struktur 3 eine weitere Leitung 9 angeschlossen, die mit dem Ventil V2 genau entgegengesetzt zum Ventil V1 geöffnet und geschlossen werden kann. Durch diese Leitung 9 wird während der Durchführung zweiter Intervalle Sauerstoff oder ein Sauerstoff enthaltendes Gasgemisch der offenzelligen Struktur 3 zugeführt, um den an Oberflächen der offenzelligen Struktur 3 während er Durchführung erster Intervalle abgehlagerten Kohlenstoff zu oxidieren.

Vor dem Eintritt des Abgasstromes 5 in die offenzellige Struktur 3 liegt ein Druck P1 an, der größer ist als der Druck P2, der nach der Durchströmung der offenzelligen Struktur 3 herrscht. Wie bereits in der allgemeinen Beschreibung ausgeführt, kann die Druckdifferenz P1 zu P2 genutzt werden, um das Verfahren zu beeinflussen, was die Einleitung und Beendigung der Durchführung erster und zweiter Intervalle betrifft. Dazu kann die Durchführung erste Intervalle beendet werden, wenn diese Druckdifferenz einen vorgegebenen größeren Schwellwert überschritten hat und danach die Einleitung der Durchführung eines zweiten Intervalls initiiert werden. Die Durchführung zweiter Intervalle kann beendet werden, wenn die Druckdifferenz einen kleineren vorgegebenen Schwellwert erreicht hat und dann wieder ein erstes Intervall durchgeführt werden kann.

Bei an sich konstanten Verhältnissen, d.h. insbesondere bei gleichem Betrieb des Verdichters 8, kann anstelle der Druckdifferenz auch allein die Bestimmung und Berücksichtigung des Druckes P1 ausreichend sein, die Verfahrensführung so zu beeinflussen, wobei dann ein größerer Schwellwert für P1 für die Beendigung erster Intervalle und ein kleinerer Schwellwert für P1 dazu genutzt wird, zweite Intervalle zu beenden, indem die Ventile V1 und V2 jeweils dem entsprechend geöffnet oder geschlossen werden.

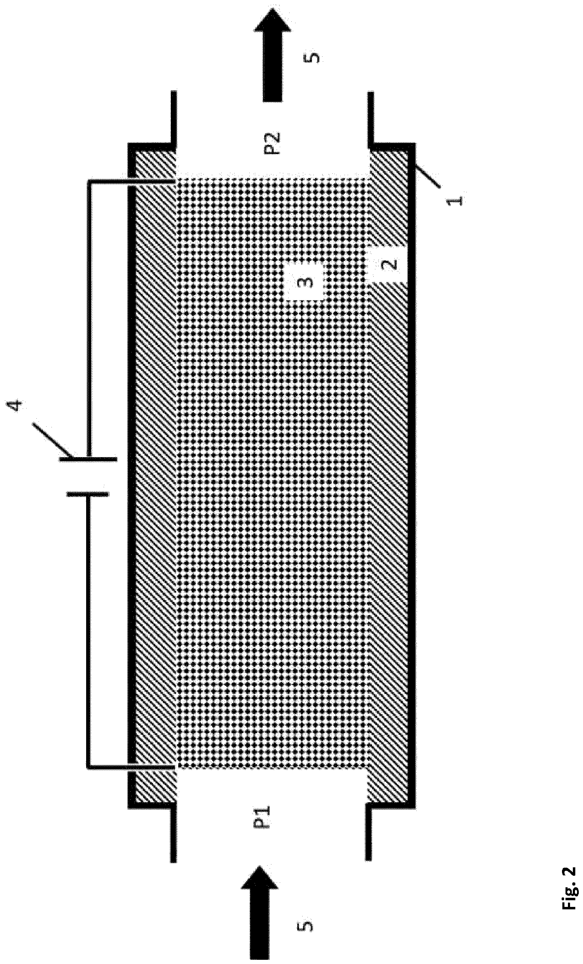

In der schematischen Darstellung von Figur 2 kann man erkennen, wie eine offenzellige Struktur 3, in diesem Fall eine Struktur eines offenporösen Metallkörpers in einem Gehäuse 1 angeordnet ist und wie ein Abgasstrom 5 durch die offenzellige Struktur 3 hindurchströmen kann. Dabei wirkt in Strömungsrichtung des Abgasstromes 5 vor der offenzelligen Struktur 3 der Druck P1 und im Anschluss daran der Druck P2.

Die offenzellige Struktur 3 ist an eine elektrische Spannungsquelle 4 angeschlossen, so dass sie mit elektrischem Strom widerstandsbeheizt werden kann, um die für die Durchführung erster und zweiter Intervalle jeweils erforderliche und geeignete Temperatur zu erreichen. Zwischen Gehäuse 1 und der offenzelligen Struktur 3 ist eine elektrische und bevorzugt auch thermische Isolierung 2 angeordnet.

Das Gehäuse 1 kann zusätzlich gekühlt sein.

## Patentansprüche

1. Verfahren zur Nachbehandlung eines Abgases einer Pyrolysereaktion, bei dem im jeweiligen Abgasstrom (5) enthaltene Kohlenwasserstoffverbindungen thermisch zersetzt werden,
indem ein innerhalb eines ersten Intervalls bei einer Pyrolyse freigesetzter Abgasstrom (5) durch mindestens eine offenzellige Struktur (3) mittels einer Druckdifferenz zwischen einer Einrichtung (6) in der die jeweilige Pyrolyse durchgeführt wird und einer mit der Umgebung verbundenen Abgasabführung geführt wird und dabei
an der mindestens einen offenzelligen Struktur (3) eine Temperatur von mindestens 600 °C eingehalten wird, so dass zumindest ein Teil der im Abgasstrom (5) enthaltenen Kohlenwasserstoffverbindungen thermisch zersetzt wird und dabei erhaltener Kohlenstoff an Oberflächen der mindestens einen offenzelligen Struktur (3) abgelagert wird und
nach Ablauf einer vorgebbaren Betriebszeit und/oder dem Erreichen eines vorgebbaren Schwellwertes einer Druckdifferenz eines Druckes P1, der vor dem Eintritt des Abgasstromes (5) in die mindestens eine offenzellige Struktur (3) und eines Druckes P2 in Strömungsrichtung nach dem Austritt aus der mindestens einen offenzelligen Struktur (3) bestimmt oder
ein vorgebbarer Schwellwert des Druckes P1, der vor dem Eintritt des Abgasstromes (5) in die mindestens eine offenzellige Struktur (3) und eines Druckes P2 in Strömungsrichtung nach dem Austritt aus der mindestens einen offenzelligen Struktur (3) bestimmt wird,
die Zufuhr des Abgasstromes (5) zur mindestens einen offenzelligen Struktur (3) gestoppt und
dann in einem zweiten Intervall anstelle des Abgasstromes (5) Sauerstoff oder ein Sauerstoff enthaltendes Gasgemisch durch die mindestens eine offenzellige Struktur (3) geführt und bei einer Temperatur von mindestens 600 °C der an Oberflächen der mindestens einen offenzelligen Struktur (3) abgesetzte Kohlenstoff oxidiert und das/die gebildete(n) Oxid(e) sowie Abgasreste abgeführt wird/werden.

2. Verfahren nach Anspruch 1, **dadurch gekennzeichnet, dass** als mindestens eine offenzellige Struktur (3) ein offenporöser Körper oder ein mit Filamenten gebildetes textiles Gebilde, das aus oder mit einem elektrisch leitenden Werkstoff gebildet ist, eingesetzt wird.

3. Verfahren nach einem der vorhergehenden Ansprüche, **dadurch gekennzeichnet, dass** die offenzellige Struktur (3) an eine elektrische Spannungsquelle (4) zur Durchführung einer elektrischen Widerstandsbeheizung angeschlossen ist und die Einhaltung der Temperatur von mindestens 600 °C mittels elektrischer Widerstandsbeheizung oder
mittels einer elektrischen Wechselspannungsquelle und mindestens einer elektrischen Spule induktiv auf die Temperatur von mindestens 600 °C erwärmt wird.

4. Verfahren nach einem der vorhergehenden Ansprüche, **dadurch gekennzeichnet, dass** erste und zweite Intervalle alternierend nacheinander mehrfach wiederholt durchgeführt werden.

5. Verfahren nach einem der Ansprüche 1 bis 3, **dadurch gekennzeichnet, dass** während der Durchführung eines ersten Intervalls der Abgasstrom (5) durch eine erste offenzellige Struktur (3) und zeitlich parallel dazu ein zweites Intervall mittels einer zweiten offenzelligen Struktur (3), die parallel zur ersten offenzelligen Struktur (3) geschaltet und betrieben ist, durchgeführt wird.

6. Verfahren nach einem der vorhergehenden Ansprüche, **dadurch gekennzeichnet, dass** eine offenzellige Struktur (3), die aus einem Metall besteht, die aus einem elektrisch leitfähigen Keramikwerkstoff besteht oder eine offenzellige Struktur (3) mit einer Metallbeschichtung an Oberflächen einer offenzelligen Struktur (3) aus einem keramischem Werkstoff eingesetzt wird.

7. Verfahren nach einem der vorhergehenden Ansprüche, **dadurch gekennzeichnet, dass** die für die Durchführung erster Intervalle gewählte vorgegebene Betriebszeit nach der Durchführung mindestens eines ersten und zweiten Intervalls angepasst, bevorzugt verkürzt wird.

8. Verfahren nach einem der vorhergehenden Ansprüche, **dadurch gekennzeichnet, dass** während der Durchführung eines zweiten Intervalls freigesetztes Abgas einem Pufferbehälter zugeführt und darin gespeichert wird, bevor es nach Beendigung der Durchführung eines jeweiligen zweiten Intervalls zur Durchführung eins nachfolgenden ersten Intervalls der mindestens einen offenzelligen Struktur (3) zugeführt wird.

9. Verfahren nach einem der vorhergehenden Ansprüche, **dadurch gekennzeichnet, dass** der Abgasstrom durch mindestens eine offenzellige Struktur geführt wird, die in Strömungsrichtung des Abgasstromes eine sich verringernde Porosität oder Porengröße oder eine Verkleinerung der Hohlräume zwischen Filamenten eines textilen Gebildes aufweist oder
in Strömungsrichtung des Abgasstromes mehrere offenzellige Strukturen (3) angeordnet und vom Abgasstrom durchströmt werden, deren Porosität und/oder Porengröße oder deren Hohlräume zwischen Filamenten in Strömungsrichtung des Abgasstromes sukzessive verkleinert sind.

10. Verfahren nach einem der vorhergehenden Ansprüche, **dadurch gekennzeichnet, dass** bei der Durchführung zweiter Intervalle gebildete(s) Kohlenstoffoxid(e) einer weiteren Nutzung, bevorzugt getrennt nach einer Separation jeweils als Kohlenmonoxid und Kohlenstoffdioxid zugeführt werden.
